# EUROPEAN PATENT APPLICATION

(11) **EP 3 032 155 A1**
(43) Date of publication of application: **15.06.2016**
(21) Application number: 14197089.7
(22) Date of filing: 10.12.2014
(51) Int. Cl.: F16L 3/22, E04G 23/02

(54) **Method for reinforcing pipe support structures for nuclear power plants**

(71) Applicant: AREVA NP Uddcomb AB, 254 66 Helsingborg (SE)
(72) Inventor: Davidsson, Mattias, 252 87 Helsingborg (SE)
(74) Representative: Awapatent AB

(57) **Abstract**

A method for reinforcing an existing pipe support (10) structure in a nuclear power plant comprises anchoring at least one reinforcement element (102; 302) to a concrete structure (2) by one or more new anchors (108) arranged outside an existing anchored element (16; 216), wherein each one of said new anchors (108) has an associated concrete failure cone (116), providing one or more load transferring elements (120; 320) for transferring loads from the existing anchored element (16; 216) via said reinforcement element (102; 302) to said new anchors (108), and loosening one or more of existing anchors (20) having a concrete failure cone (24) which would otherwise overlap (26) any one of the concrete failure cones (116) of the new anchors (108).

## Description

### TECHNICAL FIELD

The present invention generally relates to reinforcement of existing pipe supports for nuclear power plants (NPPs). In general, NPPs include an enormous amount of piping inside as well as outside the reactor containment. The piping is mounted by means of support structures of various design by which the piping is supported to concrete structures, such as walls, floors or ceilings. The piping may be supported by wall mounted console-type structures, or suspended in pendulum-type structures or mounted in other ways.

In recent years, extensive efforts are being made to prolong the life time of existing NPPs, including securing the NPPs for earthquakes, vibrations in general and other possible situations which may not have been fully considered in the initial NPP design and construction. In these processes, a large number of pipe support structures are being rebuilt involving time, costs, and unwanted contamination of the surrounding areas of the NPPs during e.g. welding and drilling.

Many of today's piping support structures in existing NPPs are old, some from the beginning of the 1970s and, therefore, has an unknown or insufficient load carrying capacity. Numerous problems and challenges must be considered in the process of seismic retrofitting existing piping support structures in NPPs.

One problem is the unknown load-bearing capacity of existing anchors. Some may have been installed back in the early 70s and, therefore, may be of unknown type and load bearing capacity. Another problem is that many existing anchors and pipe support structures where designed and installed without full consideration of the kind of loads that act or may act on the anchors and the support structure. The design loads for existing structures may typically have involved dead weight and contents but not dynamic loads caused by vibrations or earthquakes. Today, a lot more consideration is given to dynamic loads in the regulations. Still another challenge is the fact that the concrete quality may vary or be unknown.

The anchors used in existing older pipe support structures in NPPs are typically of expander-type where the load transfer mechanism essentially relies on friction. In terms of failure scenarios, a pipe support anchored by expander-type anchors may lose its load bearing capacity in the following ways:
1. Anchor (metal) breakage due to overload with the concrete essentially intact.
2. Concrete fracture resulting in a so-called concrete cone failure.
3. Malfunction of the anchor mechanism (friction failure).

The problem associated with expander-type anchors has resulted in new regulations for NPPs, and today conventional expander-type anchors are no longer allowed. Instead, only undercut-type (also termed keying-type) anchors are allowed.

Therefore, there is a need for improvements for retrofitting of pipe support structures in NPPs.

### SUMMARY OF THE INVENTION

According to a first aspect of the inventive concept, there is provided method for reinforcing an existing pipe support structure in a nuclear power plant, said existing pipe support structure comprising an existing anchored element, such as an anchor plate or an anchor profile, and one or more existing anchors holding the anchored element in position relative a concrete structure of said nuclear power plant, wherein each one of said existing anchors has an associated concrete failure cone,
said method comprising:
- anchoring at least one reinforcement element to said concrete structure by one or more new anchors arranged outside the boundaries of the said existing anchored element, wherein each one of said new anchors has an associated concrete failure cone,
- providing one or more load transferring elements for transferring loads from said existing anchored element via said reinforcement element to said new anchors, and
- loosening one or more of said existing anchors having a concrete failure cone which would otherwise overlap any one of the concrete failure cones of the new anchors.

The term "concrete structure" as used herein should be interpreted as any concrete structure in which a pipe support may be anchored, especially walls, ceilings and floors in an NPP.

The method according to the invention is for reinforcing an existing pipe support structure. This is to be interpreted as a reinforcement operation performed at a point in time well after the initial installation of the existing support structure, especially following a calculation/determination that the present or estimated load bearing capacity of the existing support structure is insufficient or could be insufficient.

The terms "concrete failure cone" and "stress cone" will be used as equivalents herein. The term "concrete failure cone" is the accepted term in the field, but it should be interpreted in a broad sense and should especially not be limited to cone-shaped volumes. The term "concrete failure cone" as used herein should be interpreted as a an imaginary volume in the concrete structure which is associated with an anchor and which would be pulled out from the concrete structure together with the anchor in a so called cone failure situation. This may occur if the tensile load on the anchor exceeds the ultimate pullout resistance of the anchor. Therefore, when discussing overlap of concrete failure cones in the present context, the size of such stress cones will be determined by calculations, typically made at a point in time before mounting the reinforcement elements and the new anchors. However, the determination regarding cone overlap may also be performed afterwards. In one embodiment, no specific overlap determination will be made with respect to the existing stress cones in relation to the new stress cones. Instead, at least some or preferably all of the existing anchors are loosened, preferably completely loosened, after mounting the reinforcement elements, the load transfer elements and the new anchors.

The existing anchored element, such as an anchor plate or an anchor profile, may be held in position by said and one or more existing anchors closely tightened to the concrete structure or, alternatively, at a distance from the concrete structure.

The expression "in position relative a concrete structure" should be interpreted as an intended operational position or "correct" position of the support structure in relation to the concrete structure after the reinforcement method has been completed. The expression should be interpreted to cover also the situation where the pipe support structure, before the reinforcement method is performed, may be in a position somewhat offset from the intended final operation position due to malfunction of the existing anchoring, for instance a slight unwanted outwardly angled position of a pipe supporting console or an unwanted positional shift parallel to the concrete surface.

The term "loosening" as used herein should be interpreted as any operation by which the ability of the existing anchors to take up tensile loads is reduced or essentially eliminated, and by which the associated concrete failure cone is reduced or essentially removed. The loosening could be limited to such a degree that the loosening is sufficient to ensure that overlap will not occur, but in preferred embodiments a complete loosening is performed. For a torque controlled expansion-type anchor this operation would typically involve loosening the anchor head. In some circumstances, "loosening" may involve cutting-off the anchor head and leaving the rest of the anchor within the concrete structure. This may be the case where the heads of the existing anchors would interfere with the desired position of the reinforcement elements used in the method.

In preferred embodiments, loosened existing anchors are not removed from the concrete structure, mainly for the reason that the resulting empty concrete bores would reduce the overall load bearing capacity of the pipe support structure but also for the reason that a complete removal of the loosened existing anchors would be time consuming and may involve unwanted contamination of the surrounding area in the NPP due to drilling or welding.

The term "existing pipe support structure" may be implemented in various ways. In some embodiments, the support structure may be in the form of a console including a horizontal pipe supporting beam welded to a wall mounted anchor plate. In other embodiments, the support structure may be in the form of a pendulum including a vertical spring hanger suspended from an anchor profile anchored to the concrete ceiling.

In preferred embodiments, the reinforcement method is performed while the existing pipe support structure is maintained in position. It is normally preferred that the pipe support structure is not disconnected completely from the concrete structure during the operation since it would involve various drawbacks such as disconnecting pipes from the support structure.

The step of providing load transferring elements for transferring loads from the existing anchored element via the reinforcement elements to the new anchors may involve providing load transferring elements for transferring tensile loads only, for transferring shear loads only or for transferring both tensile loads and shear loads. Here, tensile loads relates to tensile forces acting on the new anchors in the longitudinal direction thereof and shear loads relates to shear forces acting on the new anchors transversely to the longitudinal direction thereof.

According to a second aspect of the invention there is provided a method for reinforcing an existing pipe support structure in a nuclear power plant, said existing pipe support structure comprising an existing anchored element, such as an anchor plate or an anchor profile, and one or more existing anchors holding the anchored element in position relative a concrete structure of said nuclear power plant, wherein each one of said existing anchors has a corresponding concrete failure cone,
wherein said method comprises:
- anchoring at least one reinforcement element to said concrete structure by one or more new anchors arranged outside the boundaries of the said existing anchored element, wherein each one of said new anchors has a corresponding concrete failure cone,
- providing load transferring elements for transferring loads from said existing anchored element via said reinforcement element to said new anchors,
- determining if the concrete failure cone of any one of the existing anchors overlaps any one of the concrete failure cones of the new anchors, and
- based on the result of said determining, loosening such existing anchors which have been determined to present overlapping concrete failure cones.

According to this aspect, the step of determining if the stress cone of an existing anchor will overlap any stress cone of the new anchors, or if there is an estimated risk of overlap, if no loosening takes place of the existing anchor, will make it possible to leave one or more existing anchors unloosened for which there is no cone overlap risk.

In some embodiments, the existing anchored element may comprise an anchor plate having a first main surface facing the concrete structure (direct contact or at a distance there from) and an opposite second main surface, wherein the reinforcement element extends over and beyond the second main surface of the anchor plate. The one or more new anchors would thus be mounted in parts of the reinforcement element extending beyond the anchor plate. In one embodiment, the reinforcement element comprises a reinforcement plate having first and second end portions which extend beyond the existing anchor plate and which are anchored to the concrete structure by the new anchors. Typically, the reinforcement element would be positioned to take up torque forces acting on the anchor plate.

The step of providing load transferring elements may comprise attaching the reinforcement element to the existing anchored element by one or more bolts. As an alternative, the load transferring elements may be integrally formed with the existing anchored element and/or the reinforcement element, such as in the form of one or more protrusions formed in the reinforcement element engaging with the existing anchored element to transfer loads there between.

### BRIEF DESCRIPTION OF THE DRAWINGS

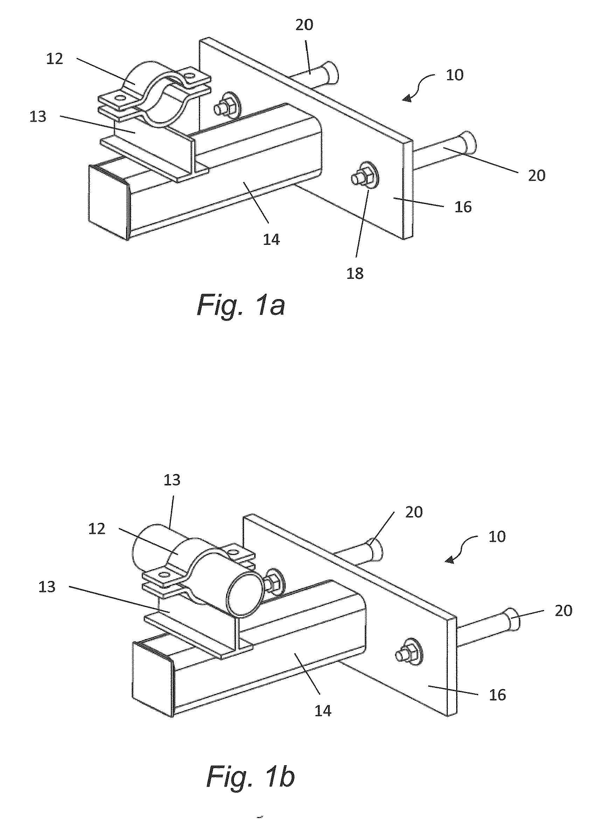

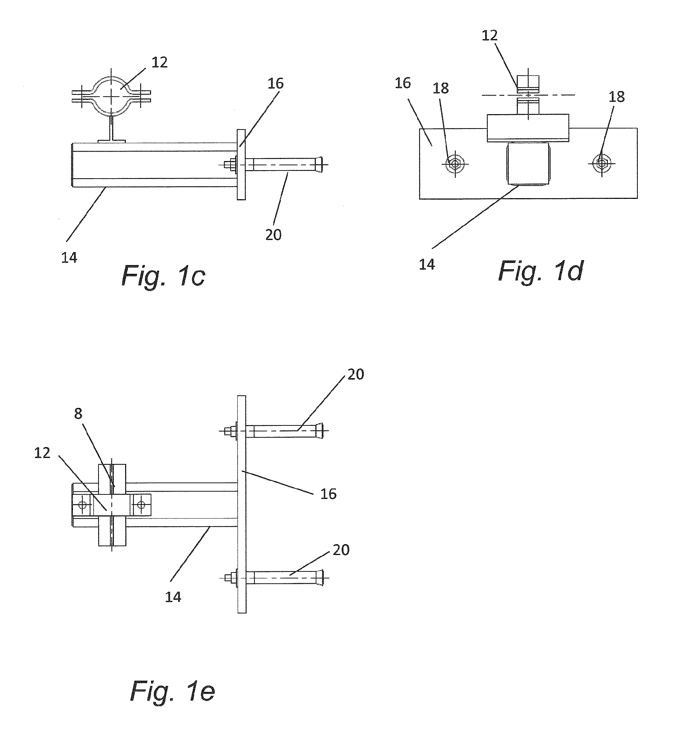

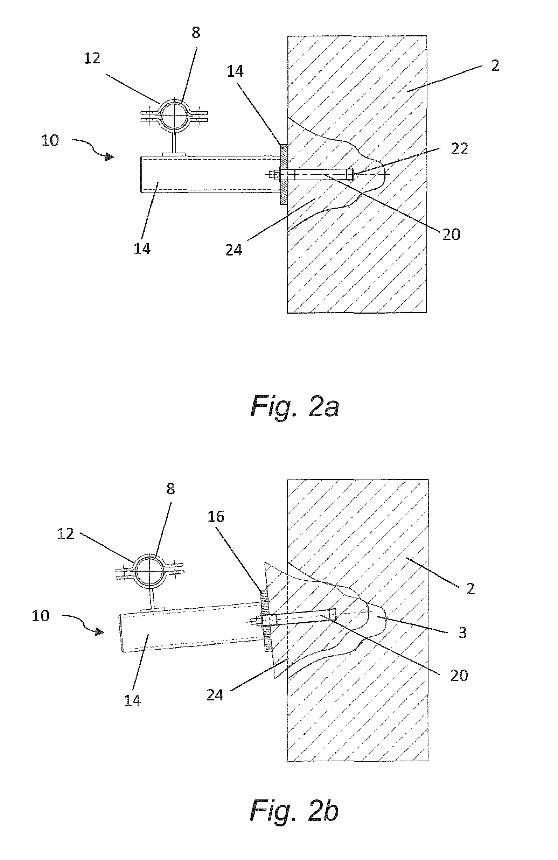

Non-limiting embodiments and further advantages of the inventive concept will now be described with reference to the drawings. In the detailed description, references to Fig. 1, Fig. 2, etc will be used as a general reference to cover all of the individual figures 1 a to 1 e, 2a and 2b, etc, for each embodiment.
Figs 1 a and 1 b are perspective views of an existing, non-reinforced pipe support structure of console type, showing the support structure without and with a supported pipe, respectively.
Figs 1c to 1e show the support structure in Fig. 1 a from the side, front and top, respectively.
Fig. 2a and 2b schematically illustrate the non-reinforced existing pipe support structure in Fig. 1a mounted to a concrete wall in a normal (non-failure) condition and in a concrete cone failure condition, respectively.
Figs 3a to 3e illustrate an existing support structure of console-type according to Fig. 1 reinforced according to an embodiment of the invention.
Fig. 4a schematically illustrates an intermediary situation during the reinforcement method according to Fig. 3.
Fig. 4b schematically illustrates the reinforced pipe support structure in Fig. 3 mounted to a concrete wall.
Figs 5a to 5d illustrate an existing support structure of pendulum-type which has been reinforced according to an embodiment of the invention
Figs 6 and 7 illustrate an existing support structure of console-type which has been reinforced according to alternative embodiments of the invention.

### DESCRIPTION OF EMBODIMENTS

Fig. 1 and Fig. 2a schematically illustrate an existing pipe support structure 10 anchored to a concrete wall 2 in an NPP. The existing support structure 10 comprises a clamp 12 around a pipe 8, a connecting structure 13, a beam 14 supporting the clamp 12 via the connecting structure 13, and an anchor plate 16 welded to the inner end of the beam 14 and provided with a number of anchor holes 18. As a non-limiting example, the whole support structure 10 could be made of steel, the beam 14 could be around 500 mm long and the dimensions of the anchor plate 16 could be around 400 x 400 x 20 mm. Such an anchor plate 16 has other names in the field, such as Dowel plate, Expander plate, etc.

The existing support structure 10 further comprises a number of existing anchors 20 extending through the anchor holes 18 of the anchor plate 16 and holding the anchor plate 16 mounted to the concrete wall 2.

Fig. 2a illustrates the existing support structure 10 in its initial or intended position. The existing anchors 20 extend into and are anchored in the concrete wall 2. In the illustrated, non-limiting example, the existing anchors 20 are of expansion type. Fig. 2a also schematically illustrates that each existing anchor 20 has an associated concrete failure cone or "stress cone" 24 within the concrete 2 and with its tip located essentially at the distal end 22 of the anchor 20. The size, angle and shape of the stress cone 24 may vary substantially as mentioned above, and the drawing is for illustration purposes only.

Fig. 2b schematically illustrates a concrete cone failure mode where the load bearing capacity of the existing pipe support structure 10 in Fig. 1 and Fig. 2a has been exceeded and the whole structure is in a failure position. The existing anchors 20 have been pulled out of the concrete 2 together with associated concrete volumes 3 corresponding to the associated concrete failure cones or stress cones 24.

The failure situation in Fig. 2b may be the result of one or more factors, such as excessive dynamic forces and/or insufficient concrete quality. In general, the reinforcement method according to the invention aims at preventing failure situations like this.

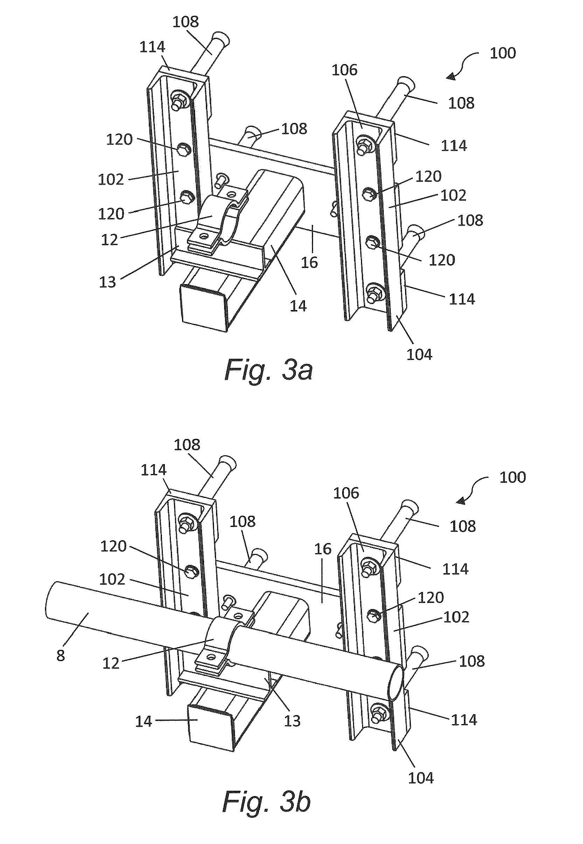

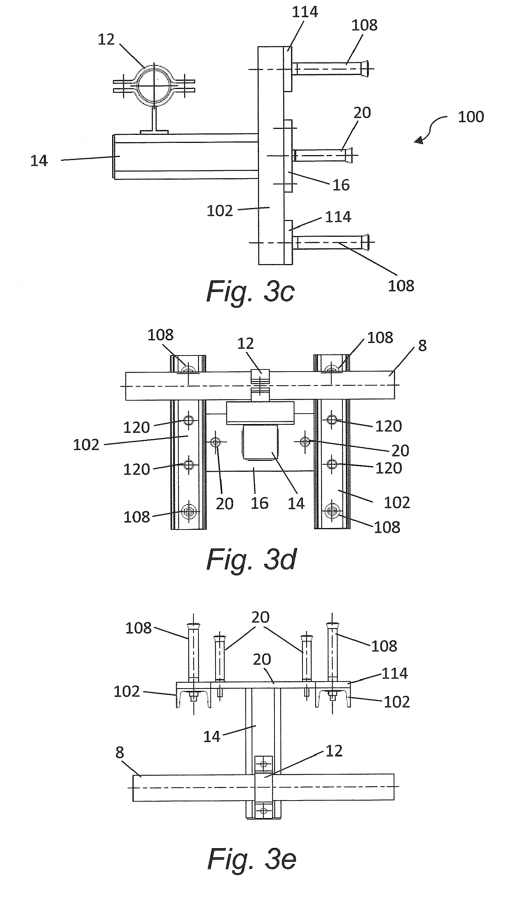

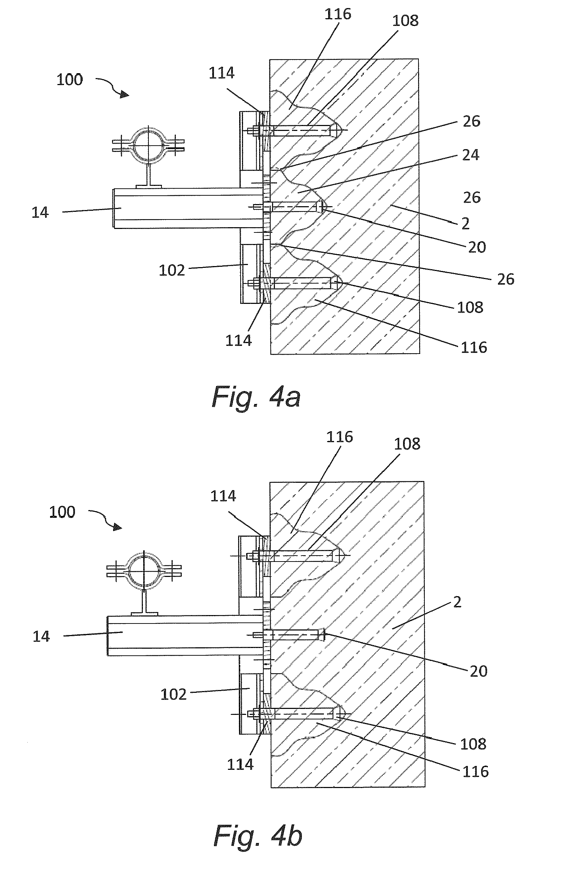

Reference is now being made to Fig. 3 and Fig. 4, illustrating an existing pipe support structure 10 according to Fig. 1 which has been reinforced according to an embodiment of the inventive method, resulting in a reinforced support structure 100.

In the embodiment shown in Fig. 3 and Fig. 4, the reinforcement method is performed as follows: In a first step, two reinforcement elements 102 in the form of U-profiles are applied over the anchor plate 16. End portions 104 and 106 of the reinforcement elements 102 extend beyond the upper and lower boundaries of the anchor plate 16. Thereafter, the reinforcement elements 102 are attached both to the existing anchor plate 16 by load transferring elements, here in the form of bolts 120, and to the concrete structure 2 by means of a number (here four) of new anchors 108. The order in which these attachments is performed may vary, but it may be preferred to first bolt the reinforcement elements 102 to the anchor plate 16 and thereafter to anchor the reinforcement elements 102 to the concrete wall 2 by the new anchors 108.

During the above procedure, the existing pipe support structure 10 with the pipe 8 supported thereby are maintained in the initial position without any need to be disengaged and removed from the concrete wall 2. In alternative embodiments of the inventive reinforcement method, the existing pipe support structure 10 may be temporarily be dislocated from the intended position.

In the embodiment shown, spacers 114 with a thickness corresponding to the thickness of the anchor plate 16 are arranged between the end portions 104, 106 and the concrete wall 2 in order to avoid bending stresses in the reinforcement elements 102.

The type, size and numbers of the new anchors 108 will be chosen depending on the specific load bearing capacity and security margins required. As an example, the new anchors 108 are of keying-type with undercut distal ends 112 forming a mechanical engagement with the concrete.

Reference is now made to Fig. 4a which schematically illustrates the support structure 100 and the concrete wall 2 seen from the side, in an intermediary (non final) phase of the embodiments of the reinforcement method. In this phase, the reinforcement elements 102 have been anchored to the concrete wall 2 by means of the new anchors 108. As a result, each new anchor 108 has an associated concrete failure cone or stress cone 116. In the example shown, there will be two stress cones 24 associated with the existing anchors 20 (termed "existing stress cones") and four stress cones 116 associated with the new anchors 108 (termed "new stress cones").

As will be seen in Fig. 4a, the new stress cones 116 overlap with the existing stress cones 24 at areas of overlap 26. Such an overlap will reduce the overall load carrying capacity and, therefore, the reinforcement method according to the invention comprises the step of loosening existing anchors having a concrete failure cone which, if not loosened, would otherwise overlap with one or more of the new concrete cones. In the illustration in Fig. 4b, the method has been completed and no area of overlap exists. In this example, the existing anchors 20 have been completely loosened to the extent possible such that there is no longer any associated stress cone. As a result, the overall load bearing capacity of the reinforced pipe supporting structure 100 is increased.

The new anchors 108 of the reinforced pipe support structure 100 may be subjected to tensile forces (in the longitudinal direction of the anchors 108) as well as shear forces (in directions transversely to the longitudinal direction of the anchors 108). In the embodiment shown in Fig. 3 and 4, the tensile forces acting on the new anchors 108 will be transferred essentially by the reinforcement elements 102 extending over and being pressed against the front side of the anchor plate 16. For transfer of shear forces to the new anchors 108 in the example shown, the load transferring elements in form of the bolts 120 are used. It will be noted that the spacers 114 are located at a distance from the anchor plate 16 and, therefore, are not active in the transfer of shear forces.

The loosening of the existing anchors may be performed in different ways. In one example, the new anchors 108 are first completely anchored to their final capacity where after the existing anchors 20 are loosened. In another example, the new anchors 108 are initially installed and only partly tightened, where after the existing anchors 20 are partly loosened and the process is repeated until the final state is reached. Such a procedure may avoid any areas of overlap 26 also during the actual reinforcement method. In still another example, the existing anchors 20 are first loosened to a certain degree or completely, where after the new anchors 108 are installed. In still another example, the whole existing support structure 10 may be taken down temporarily before installing the reinforcement elements and the new anchors.

In the example shown in Fig. 4b, the existing anchors 20 are completely loosened. This may be preferred in order to avoid any risk of overlap. In other examples it may be possible to loosen the existing anchors 20 only partly, such that there will be remaining associated stress cones 24 of reduced size with no areas of overlap 26.

As a further alternative, it would also be possible to position the reinforcement elements 102 such that they extend over the existing anchors 20. In such an embodiment it may be preferred to cut off the anchor heads of the existing anchors (i.e. complete loosening).

As illustrated in Fig. 3 and Fig. 4, the loosened, existing anchors 20 are preferably maintained inside the concrete 2 since the otherwise empty bore hole in the concrete would reduce the load bearing capacity.

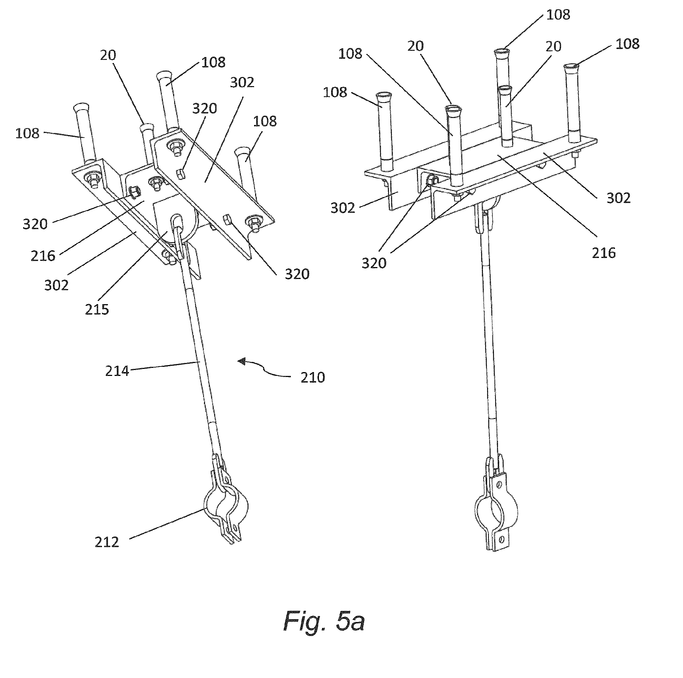

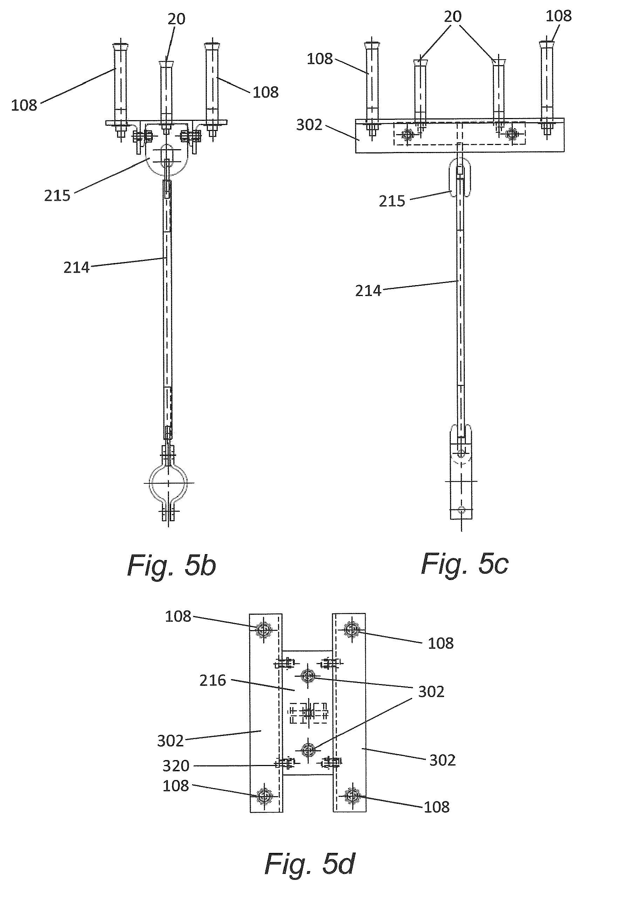

Fig. 5 illustrates how a en existing pipe support 210 of pendulum-type may be reinforced by the method according to the invention. The existing pipe support 210 comprises a pipe clamp 212, an elongate suspension element 214 pivotably supported in a bracket 215, and an existing anchor profile 216 (here a U profile) to which the bracket 215 is welded. Existing anchors 220 hold the anchor profile 216 mounted to a concrete ceiling (not shown) or the like of an NPP. In this embodiment of the invention, the reinforcement elements are in form of two L profiles 302, which are arranged on opposite sides of the existing anchor profile 216. One flange of each L profile 302 is attached to one of the flanges of the U profile 316 by load transferring elements in the form of bolts 320 and the other flange of each L profile 302 is attached to the concrete ceiling by new anchors 308.

In Fig. 5, the reinforcement elements 302 do not extend over the existing anchored element 210 as in Fig. 3 and 4 for transferring tensile forces to the new anchors. Instead, the tensile forces acting on the new anchors 308 are transferred by the bolts 320. Shear forces acting on the new anchors 308 are transferred by the flanges of the profiles 216 and 302 and by the bolts 320. As with the previous embodiments, existing anchors 120 are loosened to a desired degree in order to avoid areas of overlap between the existing stress cones and the new stress cones. Also for this pendulum support structure, the whole reinforcement method may be performed while maintaining the existing support structure in position and no welding or metal cutting is required, thus avoiding contamination of the surrounding area within the NPP.

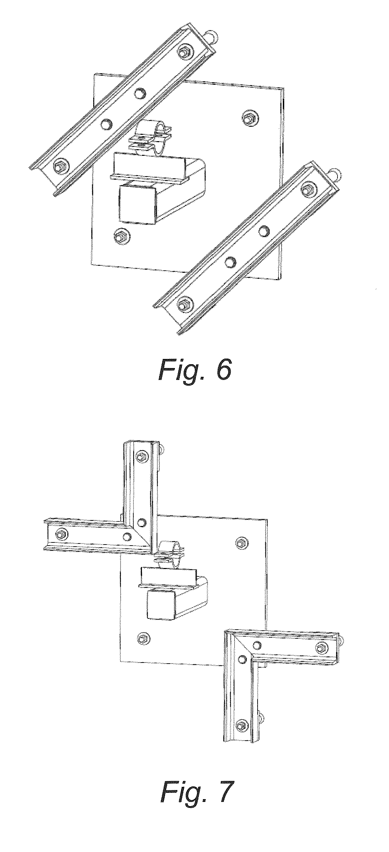

Fig. 6 and Fig. 7 show for illustration purposes some alternative embodiments for reinforcing an existing console-type pipe support structure. The embodiment in Fig. 6 is to a large extent similar to the embodiment in Fig. 1, with the difference that the reinforcement elements 102 in form elongate U profiles are arranged in an angled position extending over and beyond two corners of the anchor plate 16. Bolts attach the reinforcement elements to the anchor plate. In the embodiment in Fig. 7, the reinforcement elements are in the form of L shaped U profiles having their corner portions extending over and bolted to opposite corners of the anchor plate 16.

## Claims

1. A method for reinforcing an existing pipe support structure (10) in a nuclear power plant,
said existing pipe support structure comprising an existing anchored element (16; 216), such as an anchor plate or an anchor profile, and one or more existing anchors (20) holding the anchored element (16; 216) in position relative a concrete structure (2) of said nuclear power plant, wherein each one of said existing anchors (20) has an associated concrete failure cone (24),
said method comprising:
- anchoring at least one reinforcement element (102; 302) to said concrete structure by one or more new anchors (108) arranged outside the boundaries of the said existing anchored element (16), wherein each one of said new anchors (108) has an associated concrete failure cone (116),
- providing one or more load transferring elements (120; 320) for transferring loads from said existing anchored element (16; 216) via said reinforcement element (102; 302) to said new anchors (108), and
- loosening one or more of said existing anchors (20) having a concrete failure cone (24) which would otherwise overlap any one of the concrete failure cones (116) of the new anchors (108).

2. A method as claimed in 1, wherein said method is performed while maintaining said existing anchored element (16; 216) in said position.

3. A method as claimed in any of the preceding claims, wherein at least one of said new anchors (108) is so positioned that its concrete failure cone (116) would, if said loosening would not be performed, overlap at least one of the concrete failure cones (24) of the existing anchors (20).

4. A method as claimed in any of the preceding claims, wherein said providing load transferring elements (120; 320) comprises providing load transferring elements that transfer at least shear forces to the new anchors (108).

5. A method as claimed in any of the preceding claims, wherein loosened existing anchors (20) are maintained in the concrete structure (2) after loosening.

6. A method as claimed in any of the preceding claims, said wherein said loosening comprises a complete loosening.

7. A method as claimed in any of the preceding claims, wherein said existing anchored element comprises an anchor plate (16) having a first main surface facing the concrete structure and an opposite second main surface, wherein said at least one reinforcement element (102) extends over and beyond said second main surface of the anchor plate (16).

8. A method as claimed in claim 7, wherein said reinforcement element comprises a reinforcement plate or profile (102) having first and second end portions (104; 106) which extend beyond the existing anchor plate (16) and which are anchored to the concrete structure (2) by said new anchors (108).

9. A method as claimed in any of claims 1 to 6,
wherein said existing anchored element comprises an anchor profile, such as a U profile or an L profile (216), having one profile part anchored to said concrete structure (2) by said existing anchors (20) and at least one profile flange extending outwardly from said concrete structure (20), and
wherein said reinforcement element comprises a reinforcement profile (302) having one profile part which is anchored to said concrete structure (2) by said new anchors (108) and one profile flange which is attached to said profile flange of the existing anchor profile (216) by said load transferring elements (320).

10. A method as claimed in any of the preceding claims, wherein said providing load transferring elements comprises attaching the reinforcement element to the existing anchored element by bolts (120; 320).

11. A method as claimed in any of the preceding claims, wherein said new anchors (108) comprises keying-type anchors.

12. A method for reinforcing an existing pipe support structure in a nuclear power plant,
said existing pipe support structure (10) comprising an existing anchored element (16; 216), such as an anchor plate or an anchor profile (16; 216), and one or more existing anchors (20) holding the anchored element (16; 216) in position relative a concrete structure (2) of said nuclear power plant, wherein each one of said existing anchors (20) has a corresponding concrete failure cone (24),
said method comprising:
- anchoring at least one reinforcement element (102; 302) to said concrete structure (2) by one or more new anchors (108) arranged outside the boundaries of the said existing anchored element (16; 216), wherein each one of said new anchors (108) has a corresponding concrete failure cone (116),
- providing load transferring elements (120; 320) for transferring loads from said existing anchored element via said reinforcement element to said new anchors (108),
- determining if the concrete failure cone (24) of any one of the existing anchors (20) overlaps (26) any one of the concrete failure cones (116) of the new anchors (108), and
- based on the result of said determining, loosening such existing anchors (20) which have been determined to present overlapping (26) concrete failure cones.

13. A method as claimed in 12, wherein said method is performed while maintaining said existing anchored element (16, 216) in said position.
